# EUROPÄISCHE PATENTSCHRIFT

(11) **EP 2 710 692 B1**
(45) Veröffentlichungstag und Bekanntmachung des Hinweises auf die Patenterteilung: **18.11.2015**
(21) Anmeldenummer: 13726182.2
(22) Anmeldetag: 29.05.2013
(51) Int. Cl.: H01R 25/14, B60M 1/34

(54) **VERBINDER FÜR STROMSCHIENEN**
CONNECTOR FOR BUSBARS
DISPOSITIF DE JONCTION DE BARRES CONDUCTRICES

(30) Priorität: 31.07.2012 DE 102012106985
(43) Veröffentlichungstag der Anmeldung: 26.03.2014
(73) Patentinhaber: Paul Vahle GmbH & Co. KG, 59174 Kamen (DE)
(72) Erfinder: TEMBAAK, Philip, 59368 Werne (DE)
(74) Vertreter: Lenzing Gerber Stute
(86) Internationale Anmeldenummer: PCT/EP2013/060999
(87) Internationale Veröffentlichungsnummer: WO 2014/019734

(56) Entgegenhaltungen:
- EP-A2- 1 753 096
- FR-A1- 2 846 160
- US-A- 2 218 016
- US-A- 3 892 299
- US-A- 3 957 142
- US-A- 4 016 961

## Beschreibung

Die vorliegende Erfindung betrifft einen Stromschienenverbinder zum Verbinden der Enden zweier aneinandergrenzender Stromschienen.

Stromschienenverbinder dienen als elektrische und mechanische Verbindungen von aneinander angrenzenden Stromschienen, welche eine Schleiffläche aufweisen können, entlang derer Stromabnehmer von beweglichen Verbrauchern schleifen und diese mit elektrischer Energie versorgen.

Herkömmliche Stromschienenverbinder weisen meist ein Verbindungselement auf, welches auf die Enden der Stromschienen geschoben, geklippt oder geschraubt wird, um diese mechanisch und elektrisch miteinander zu verbinden und zueinander fluchtend auszurichten.

Aus EP 1753096 B1 ist ein Stromschienenverbinder mit zwei Verbindungselementen bekannt, welche mittels mehrerer Verbindungsschrauben gegeneinander pressbar sind. Die Verbindungsschrauben durchgreifen Bohrungen der beiden Verbindungselemente und sind in ein Einlageteil einschraubbar, welches verdrehsicher in einer schlitzartigen Öffnung der Stromschienenenden einliegt. Die Verbindungselemente weisen gekrümmte Seitenflanken auf, deren gekrümmten Innenwandungen der äußeren gekrümmten Form der Seitenwandungen der Stromschienen angepasst sind. Die Verbindungselemente weisen relativ zur Achse des Schraubenschafts angeordnete Anlageflächen auf, wodurch die Verbindungselemente beim Anziehen der Schrauben mit den Innenwandungen

Ihrer Seitenflanken gegen die äußeren Seitenwandungen der Stromschienen gedrückt werden. Nachteilig bei dieser Ausführungsform ist, dass die beiden Verbindungselemente unterschiedlich ausgebildet sind und zudem aufgrund der außenmittigen Anordnung der schrägen Anlageflächen unterschiedliche Drehmomente auf die Verbindungselemente wirken. Durch die Ausgestaltung werden die Verbindungselemente lediglich von der Seite gegen die Seitenwandungen der Stromschienen gedrückt.

Aufgabe der vorliegenden Erfindung ist es, einen Stromschienenverbinder mit großen Kontaktflächen bereitzustellen, damit der Übergang von einer Stromschiene zur nächsten einen geringen ohmschen Widerstand bildet, und dass sich der Stromschienenverbinder kostengünstiger herstellen lässt.

Diese Aufgabe wird erfindungsgemäß mit einem Stromschienenverbinder mit den Merkmalen des Anspruch 1 gelöst. Weitere vorteilhafte Ausgestaltungen des Stromschienenverbinders gemäß Anspruch 1 ergeben sich durch die Merkmale der Unteransprüche.

Der erfindungsgemäße Stromschienenverbinder zeichnet sich vorteilhaft dadurch aus, dass er an mindestens zwei Seiten der miteinander zu verbindenden Stromschienenenden anliegt und mittels mindestens eines Schraubelementes mit seinen Anlageflächen gegen die mindestens zwei Seiten der Stromschienen kraftbeaufschlagt bzw. gedrückt wird. Hierdurch ergeben sich vorteilhaft eine große Anlagefläche und ein guter Kontakt zwischen den Teilen des erfindungsgemäßen Stromschienenverbinders und den Stromschienen, wodurch der Übergangswiderstand gering gehalten wird. Die Erwärmung aufgrund des Stromdurchflusses bleibt somit vorteilhaft klein. Im Vergleich zu herkömmlichen Stromschienenverbindern kann der erfindungsgemäße Stromschienenverbinder hierdurch in Stromschienenrichtung vorteilhaft kürzer ausgebildet werden. Die beiden Verbindungselemente sind identisch ausgestaltet, so dass die Herstellungs- und Lagerkosten für den erfindungsgemäßen Stromschienenverbinder niedrig gehalten werden.

Der Erfindung liegt die Idee zugrunde, durch eine Schraubverbindung den Stromschienenverbinder gegen die erste Seite der Stromschienen anzudrücken, an der sich die Schraubverbindung abstützt und zusätzlich durch die Ausbildung der Verbindungselemente des Stromschienenverbinders die Kraft der Schraubverbindung zu nutzen, um eine resultierende Kraft zu erzeugen, die mindestens ein Verbindungselement gegen eine weitere Anlagefläche, insbesondere seitlich gegen die Stromschienenenden andrückt. Durch das seitliche Andrücken des mindestens einen Verbindungselementes des Stromschienenverbinders und das Andrücken gegen die erste Seite der Stromschienen werden diese zueinander fluchtend ausgerichtet und mechanisch und elektrisch sicher miteinander verbunden.

Vorteilhaft wird mindestens ein Schraubelement für jedes Stromschienenende vorgesehen. Es ist jedoch vorteilhaft, mehrere Schraubelemente an jedem Stromschienenende anzuordnen, so dass sich eine stabile Verbindung ergibt.

Die resultierende Kraft weist vorteilhaft eine Kraftkomponente auf, welche quer zur Kraftrichtung der Schraubverbindung wirkt, wodurch zumindest ein Verbindungselement seitlich gegen die Stromschienenenden gedrückt wird. Vorteilhaft weisen jedoch beide Verbindungselemente Anlageflächen auf, die seitlich gegen die Stromschienenenden durch das Anziehen der Schraubverbindung bzw. der Schraubverbindungen angedrückt werden.

Zur Erzielung der resultierenden Kraft weist vorteilhaft ein Verbindungselement eine schräg zur Längsachse der Schraubverbindung ausgerichtete Anlagefläche auf, welche gegen eine Anlagestelle des anderen Verbindungselementes wirkt. Die Anlagestelle kann vorteilhaft ebenfalls als Anlagefläche ausgebildet ist sein. Mittels der Schraubverbindung wird die Anlagefläche des einen Verbindungselementes gegen die Anlagestelle des anderen Verbindungselementes angedrückt. Durch die schräge Ausbildung einer Anlagefläche zumindest eines Verbindungselementes werden die beiden Verbindungselemente quer zu Richtung der Längsachse der Schraubverbindung zueinander verstellt und aufeinander zubewegt, so dass zwischen ihren Anlageflächen die Stromschienen seitlich eingefasst werden.

Vorteilhaft sind beide schrägen, miteinander korrespondierenden Anlageflächen der Verbindungselemente parallel zueinander ausgerichtet. Der Winkel der schrägen Anlageflächen sollte in einem Bereich von 10° bis 45° ausgebildet sein. Es sind jedoch auch andere Winkel denkbar. Der Winkel sollte jedoch so bemessen sein, dass sich eine genügend große Andruckkraft durch die Querkomponente der resultierenden Kraft erzeugen lässt.

Die Verbindungselemente können kostengünstig als Strangpressprofile hergestellt werden. Diese können im Querschnitt T- oder L-förmig ausgebildet sein, wobei sie jeweils einen aufeinander zuweisenden Schenkel aufweisen, welcher die korrespondierende Anlagefläche bildet. Die Länge dieser Schenkel und die korrespondierenden Anlageflächen sind so zu bemessen, dass beim Anziehen der Schraubverbindung und der daraus resultierenden Relativbewegung der Verbindungselemente zueinander quer zur Schraubverbindungsachse genügend Freiraum verbleibt, so dass sichergestellt ist, dass sich die Verbindungselemente genügend weit relativ zueinander bewegen können.

Die korrespondierenden Anlageflächen können durch schräge Hinterschnitte der zueinander weisenden Schenkel gebildet sein.

Nachfolgend wird anhand von Zeichnungen eine mögliche Ausführungsform des erfindungsgemäßen Stromschienenverbinders näher erläutert.

Es zeigen:
- Fig. 1:: Eine Seitenansicht zweier Stromschienen, die mittels des erfindungsgemäßen Stromschienenverbinders miteinander verbunden sind;
- Fig. 2:: eine perspektivische Ansicht der Verbindungsstelle;
- Fig. 3:: eine Querschnittsdarstellung durch den Endbereich einer Stromschiene und den an ihr befestigtem Stromschienenverbinder;
- Fig. 4:: eine perspektivische Ansicht eines Verbindungselementes des erfindungsgemäßen Stromschienenverbinders;
- Fig. 5:: eine Draufsicht auf das Verbindungselement gemäß Figur 4;
- Fig. 6:: eine Querschnittsdarstellung durch das Verbindungselement gemäß Figur 4;
- Fig. 7:: einen montierten Stromschienenverbinder ohne Stromschiene;
- Fig. 8:: eine Querschnittsdarstellung durch eine Stromschiene.

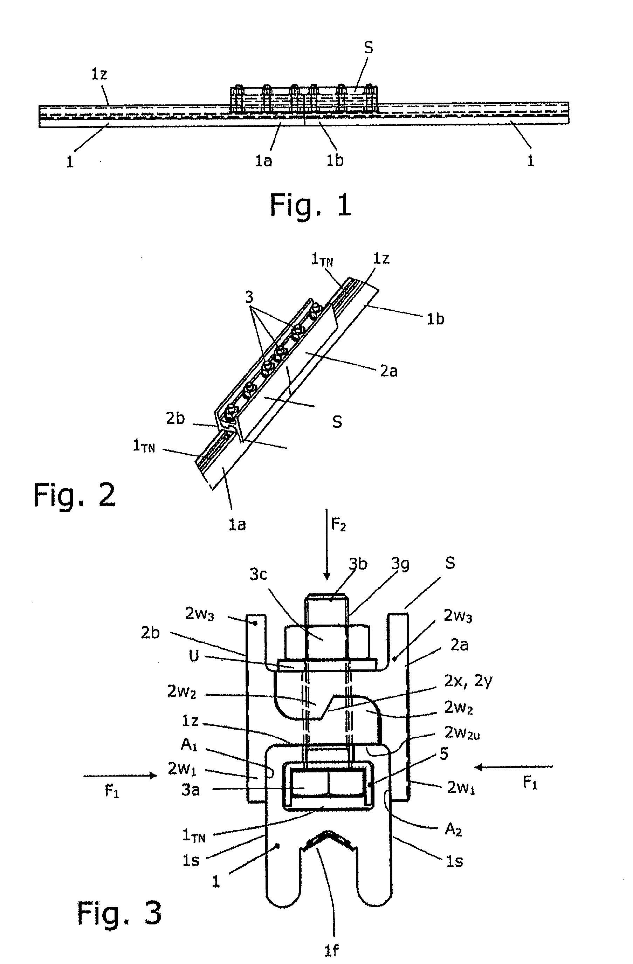

Die Figur 1 zeigt eine Seitenansicht zweier Stromschienen 1, deren zueinander zugewandten Enden 1a, 1b mittels des erfindungsgemäßen Stromschienenverbinders S miteinander verbunden sind. Der Stromschienenverbinder liegt dabei auf der Oberseite 1z der Stromschienen 1 auf und ist mittels Schraubverbindungen 3 mit diesen verbunden. Wie den Figuren 2 und 3 zu entnehmen ist, greifen die Schraubverbindungen 3 in eine T-Nut 1_{TN} ein, welche sich an der Oberseite 1z der Stromschienen 1 befindet, und stützen sich innen an den die Öffnung der T-Nut 1_{TN} begrenzenden Wandungen der Stromschiene ab.

Der Stromschienenverbinder S weist zwei Verbindungselemente 2a, 2b auf, welche als Längsprofile ausgebildet sind und in der dargestellten Ausführungsform identisch ausgebildet sind. Die Verbindungselemente 2a, 2b sind um ihre Längsachse herum um 180° verdreht zueinander angeordnet. Mittels der Schraubverbindung 3 wird eine Andruckkraft F₂ erzeugt, durch die die beiden Verbindungselemente 2a, 2b gegeneinander gedrückt werden und mit ihren Anlageflächen 2x, 2y aneinander anliegen. Durch die schräge Ausbildung der Anlageflächen 2x, 2y werden die beiden Verbindungselemente 2a, 2b in Richtung der Kräfte F₁ kraftbeaufschlagt, so dass sie mit ihren weiteren Anlageflächen A₁, A₂ gegen die Seitenwände der Stromschienen 1 drücken. Durch die Kraft F2 wird ferner das Verbindungselement 2a mit der Unterseite 2w₂ᵤ seiner Wandung 2w₂ gegen die Oberseite 1z der Stromschiene 1 gedrückt. Der Stromschienenverbinder S liegt somit im fest montierten Zustand an drei Seiten 1s und 1z der Stromschiene 1 an.

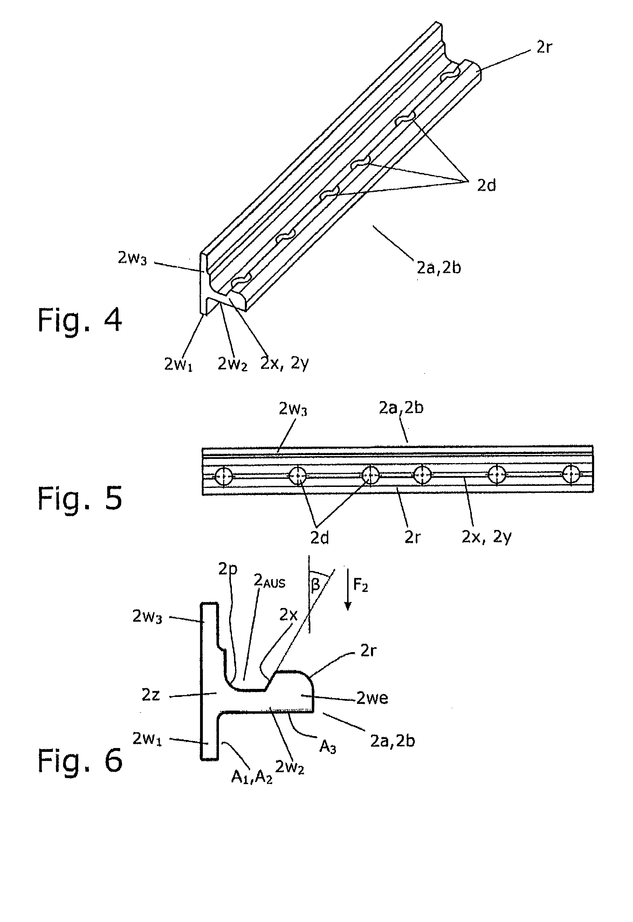

Die identisch ausgebildeten Verbindungselemente 2a, 2b sind in verschiedenen Ansichten in den Figuren 4 bis 6 dargestellt. Im Querschnitt ist das Verbindungselement 2a, 2b annähernd T-förmig ausgebildet und besteht aus den Schenkeln 2w₁, 2w₂, 2w₃ und dem zentralen Bereich 2z, in dem die drei Schenkel miteinander verbunden sind. Der untere Schenkel 2w₁ bildet mit seiner einen flachen Seite die Anlagefläche A₁, A₂ zur seitlichen Anlage an die Stromschiene. Der mittlere Schenkel 2w₂ bildet mit seiner Unterseite die Anlagefläche A₃ an der sich entweder die Schraubverbindung abstützt oder welche an der Oberseite 1z der Stromschiene 1 anliegt. Die Oberseite des Schenkels 2w₂ bildet die schräggestellte Anlagefläche 2x, 2y, welche im Winkel β zur Kraft F₂ angeordnet ist. Die schräge Anlagefläche 2x, 2y wird durch die Ausnehmung 2_{AUS}, welche einen Hinterschnitt bildet, gebildet. Die Ausnehmung 2_{AUS} ist derart groß auszubilden, dass der Wandungsendbereich 2we des anderen Verbindungselementes ausreichend Platz hat, so dass die Verbindungselemente 2a, 2b so weit zueinander verstellt werden können, dass sich eine sichere Anlage sowohl an der Oberseite 1z als auch an den Seitenwänden 1s der Stromschiene 1 ergibt. Die runde Kante 2r der Wandung 2w₂ korrespondiert dabei mit der runden Ecke 2p, wobei darauf zu achten ist, dass die Kante 2r nicht die Ecke 2p berührt.

Die Verbindungselemente 2a, 2b weisen eine Mehrzahl an Durchgriffsöffnungen 2d auf, deren Innendurchmesser größer ist als der Außendurchmesser des Schraubenhalses 3b, so dass die Verbindungselemente noch genügend Spielraum für ihre Relativbewegungen aufgrund der resultierenden Kraft quer zur Kraftrichtung der Kraft F₂ haben.

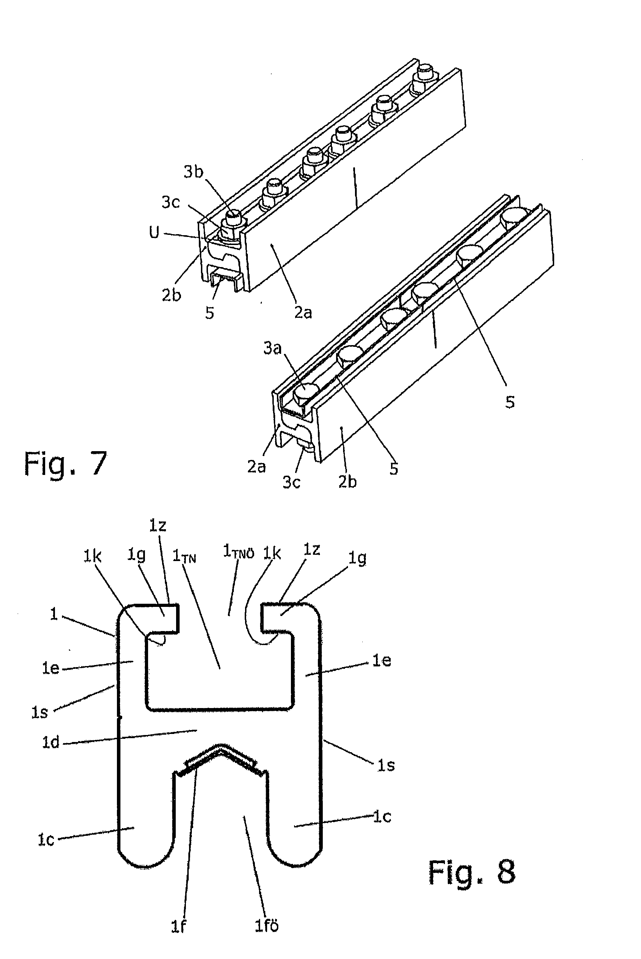

In der T-Nut 1_{TN} der Oberseite 1z der Stromschiene 1 ist ein im Querschnitt u-förmiges Abstütztelement 5 eingelegt, welches ebenfalls an seiner Bodenwandung Durchgriffsöffnungen für die Schraubverbindungen 3 aufweist. Das u-förmige Abstütztelement 5 hat dabei eine Breite, die größer ist als die Breite der Öffnung 1_{TNÖ} (siehe Figur 8) der T-Nut 1_{TN}.

Zur Montage des Stromschienenverbinders S an den Stromschienenenden 1a, 1b, kann dieser vormontiert werden, wie es in der Figur 7 dargestellt ist. Die Figur 7 zeigt einen montierten Stromschienenverbinder S ohne Stromschiene 1, wobei die linke obere Ansicht den Stromschienenverbinder S von oben und die rechte untere Ansicht den Stromschienenverbinder S von unten zeigt. Der vormontierte Stromschienenverbinder S kann, sofern die Schraubverbindungen 3 genügend gelockert sind, stirnseitig in die offenen T-Nuten 1_{TN} der Stromschiene mit seinen Schraubenköpfen 3a und dem u-förmigen Abstütztelement 5 eingeschoben werden. Sobald der Stromschienenverbinder S relativ zum Stromschienenende 1a richtig positioniert ist, kann er an einem Stromschienenende 1a vormontiert werden. Nach der Vormontage am ersten Stromschienenende 1a kann er in das andere Stromschienenende 1b eingeführt werden, wonach dann die Schrauben fest angezogen werden und der Stromschienenverbinder hierdurch fest mit den Stromschienenenden 1a verbunden ist und die Stromschienenenden 1a zueinander ausgerichtet sind.

Selbstverständlich kann zur Montage an dem Stromschienenende zunächst auch nur das u-förmige Abstütztelement 5 mit zuvor durchgesteckten Schrauben 3a, 3b in die Stirnseiten der Stromschienen 1 eingeführt werden. Nach dem Einschieben sind die Schrauben 3 verliersicher in Position gehalten. Sobald die Stromschienen 1 fest an ihren Trägern montiert sind, können die Verbindungselemente 2a, 2b aufgesetzt werden. Da der Abstand der Durchgriffsöffnungen des u-förmigen Abstütztelementes 5 in Stromschienenrichtung gleich dem Abstand der Durchgriffsöffnungen 2d der Verbindungselemente 2a, 2b ist, können diese problemlos aufgesetzt werden. Anschließend müssen nur noch die Muttern 3c mit ihren Unterlegscheiben U auf das Gewinde der Schrauben 3a, 3b aufgeschraubt und festgezogen werden.

Die Figur 8 zeigt eine Querschnittsdarstellung durch eine Stromschiene 1, welche für die Verbindung mit dem Stromschienenverbinder S an ihrer Oberseite 1z ein T-Nut 1_{TN} aufweist, die durch die Wandungen 1e und durch die kragenförmigen Wandungen 1g gebildet ist, wobei letztere die Öffnung 1_{TNnÖ} der T-Nut 1_{TN} bilden. Die Unterseite 1k der Wandungen 1g bilden die Abstützflächen für das u-förmige Abstützelement 5. Die beiden unteren Wandungen 1c, welche sich an den zentralen Abschnitt 1d anschließen, bilden die Öffnung 1fö für den Eingriff des nicht dargestellten Stromabnehmers, welcher mit seinem Schleifkontakt entlang der Schleiffläche 1f entlanggleitet.

## Patentansprüche

1. Stromschienenverbinder (S) zum Verbinden der Enden (1a, 1b) zweier Stromschienen (1), ein erstes und ein zweites Verbindungselement (2a, 2b) sowie mindestens ein Schraubelement (3) aufweisend, wobei die Verbindungselemente (2a, 2b) mittels des mindestens eines Schraubelementes (3) mit den Stromschienenenden (1a, 1b) verbindbar sind, wobei sich das Schraubelement (3) einerseits an einer ersten Seite (1z) eines Stromschienenendes (1a) abstützt und sich andererseits an dem ersten Verbindungselement (2a) abstützt, und wobei mittels des mindestens einen Schraubelementes (3) eine Kraft (F₂) erzeugbar ist, welche das zweite Verbindungselement (2b) gegen die erste Seite (1z) zumindest einer Stromschiene (1) drückt, wobei die Verbindungselemente (2a, 2b) miteinander korrespondierende Anlagen, insbesondere Anlageflächen (2x, 2y) aufweisen, von denen zumindest eine Anlage eines Verbindungselementes (2a, 2b) als Anlagefläche (2x, 2y) ausgebildet ist, welche schräg zur Richtung der Kraft (F₂) angeordnet ist, so dass durch die Kraft (F₂) und die schräge Anlagefläche (2x, 2y) eine resultierende Kraft (F₃) mit einer Kraftkomponente (K₁) quer zur Richtung der Kraft (F₂) entsteht, welche zumindest ein Verbindungselement (2a, 2b) mit seiner mindestens einen weiteren Anlagefläche (A₁, A₂) in Richtung der Kraft (K₁), insbesondere seitlich, gegen die Stromschienen (1) drückt, wobei die Verbindungselemente (2a, 2b) identisch zueinander ausgebildet sind.

2. Stromschienenverbinder (S) nach Anspruch 1, **dadurch gekennzeichnet, dass** das erste und zweite Verbindungselement (2a, 2b) ein Profilteil ist.

3. Stromschienenverbinder (S) nach Anspruch 2, **dadurch gekennzeichnet, dass** das erste und zweite Verbindungselement (2a, 2b) im Querschnitt T-förmig ausgebildet ist.

4. Stromschienenverbinder (S) nach einem der Ansprüche 1 bis 3, **dadurch gekennzeichnet, dass** das erste und zweite Verbindungselement (2a, 2b) jeweils eine, insbesondere als Schenkel ausgebildete, erste Wandung (2w₁) aufweist, welche mit ihrer einen Seite die weitere Anlagefläche (A₁, A₂) bildet.

5. Stromschienenverbinder (S) nach einem der Ansprüche 1 bis 4, **dadurch gekennzeichnet, dass** das erste und das zweite Verbindungselement (2a, 2b) jeweils eine, insbesondere als Schenkel ausgebildete, zweite Wandung (2w₂) aufweisen, welche jeweils mit ihrer einen Seite eine korrespondierende Anlage oder Anlagefläche (2x, 2y) bilden.

6. Stromschienenverbinder (S) nach einem der Ansprüche 1 bis 5, **dadurch gekennzeichnet, dass** die Anlageflächen (2x, 2y) der Verbindungselemente (2a, 2b) parallel zueinander ausgebildet sind.

7. Stromschienenverbinder (S) nach einem der Ansprüche 1 bis 6, **dadurch gekennzeichnet, dass** die Anlageflächen (2x, 2y) in einem Winkel β zur Kraft (F₂) angeordnet sind, wobei der Winkel β zwischen 10° und 45° groß sein kann.

8. Stromschienenverbinder (S) nach einem der Ansprüche 1 bis 7, **dadurch gekennzeichnet, dass** das erste und das zweite Verbindungselement (2a, 2b) mindestens eine Ausnehmung, insbesondere in Form einer fensterartigen Durchgriffsöffnung (2d), einer Bohrung oder eines Langloches, für den Durchgriff des mindestens einen Schraubmittels (3) aufweist.

9. Stromschienenverbinder (S) nach einem der Ansprüche 1 bis 8, **dadurch gekennzeichnet, dass** die Verbindungselemente (2a, 2b) aus einem leitenden Material, insbesondere Kupfer, sind.

10. Stromschienenverbinder (S) nach einem der Ansprüche 1 bis 9, **dadurch gekennzeichnet, dass** das Schraubmittel (3) eine Schraube mit Schraubenkopf (3a) einem Gewindeabschnitt (3b) und einer Schraubenmutter (3c) ist, wobei der Schraubenkopf (3a) zur Abstützung an der Stromschiene (1) dient und die Verbindungselemente (2a, 2b) derart ausgebildet sind, dass mittels eines Werkzeuges die Schraubenmutter (3c) zur Erzeugung der Kraft (F₂) anzieht bar ist.

11. Stromschiene (1) mit einem Stromschienenverbinder (S) nach einem der Ansprüche 1 bis 10 **dadurch gekennzeichnet, dass** die Stromschiene (1) an ihrer dem Stromschienenverbinder (S) zugewandten ersten Seite (1z) mindestens ein Befestigungsmittel für die Verankerung des Schraubmittels (3) hat.

12. Stromschiene mit Stromschienenverbinder nach Anspruch 11, **dadurch gekennzeichnet, dass** das Befestigungsmittel eine T-Nut zur Aufnahme eines Schraubenkopfes oder einer Schraubenmutter des Schraubmittels (3) oder eine Bohrung mit Innengewinde zum Einschrauben des Schraubmittels (3) ist.

13. Stromschiene mit Stromschienenverbinder nach Anspruch 11 oder 12, **dadurch gekennzeichnet, dass** die Stromschiene eine Schleiffläche (1s) zum Kontakt mit einem Stromabnehmer, zwei seitliche Außenwandungen (1a, 1b) und eine dem Stromabnehmer abgewandte Außenwandung (1z) aufweist, die die erste Seite für die Anlage des zweiten Verbindungselementes (2b) bildet.

## Claims

1. Conductor rail connector (S) for connecting the ends (1 a, 1 b) of two conductor rails (1), comprising a first and a second connecting element (2a, 2b) and at least one screw element (3), wherein the connecting elements (2a, 2b) can be connected to the conductor rail ends (1a, 1 b) by means of the at least one screw element (3), wherein the screw element (3) is on the one hand supported on a first side (1z) of a conductor rail end (1a) and is supported on the other hand on the first connecting element (2a), and wherein by means of the at least one screw element (3) a force (F₂) can be generated which presses the second connecting element (2b) against the first side (1z) of at least one conductor rail (1), wherein the connecting elements (2a, 2b) have bearings corresponding to one another, in particular bearing surfaces (2x, 2y), of which at least one bearing of a connecting element (2a, 2b) is configured as a bearing surface (2x, 2y) which is arranged obliquely with respect to the direction of the force (F₂), so that by the force (F₂) and the oblique bearing surface (2x, 2y) a resultant force (F₃) is created with a force component (K₁) transverse with respect to the direction of the force (F₂), which presses at least one connecting element (2a, 2b) with its at least one further bearing surface (A₁, A₂) in the direction of the force (K₁), in particular laterally, against the conductor rails (1), wherein the connecting elements (2a, 2b) are configured identically.

2. Conductor rail connector (S) according to Claim 1, **characterised in that** the first and second connecting elements (2a, 2b) are profiled parts.

3. Conductor rail connector (S) according to Claim 2, **characterised in that** the first and second connecting elements (2a, 2b) are configured with a T-shape in cross section.

4. Conductor rail connector (S) according to one of Claims 1 to 3, **characterised in that** the first and second connecting elements (2a, 2b) respectively have a first wall (2w₁), configured in particular as a limb, which with its one side forms the further bearing surface (A₁, A₂).

5. Conductor rail connector (S) according to one of Claims 1 to 4, **characterised in that** the first and second connecting elements (2a, 2b) respectively have a second wall (2w₂), configured in particular as a limb, which respectively form a corresponding bearing or bearing surface (2x, 2y) with their one side.

6. Conductor rail connector (S) according to one of Claims 1 to 5, **characterised in that** the bearing surfaces (2x, 2y) of the connecting elements (2a, 2b) are configured parallel to one another.

7. Conductor rail connector (S) according to one of Claims 1 to 6, **characterised in that** the bearing surfaces (2x, 2y) are arranged at an angle β with respect to the force (F₂), in which case the angle β may be between 10° and 45°.

8. Conductor rail connector (S) according to one of Claims 1 to 7, **characterised in that** the first and second connecting elements (2a, 2b) have at least one recess, particularly in the form of a window-like gripping opening (2d), a bore or an elongate hole, for gripping the at least one screw means (3).

9. Conductor rail connector (S) according to one of Claims 1 to 8, **characterised in that** the connecting elements (2a, 2b) are made of a conductive material, in particular copper.

10. Conductor rail connector (S) according to one of Claims 1 to 9, **characterised in that** the screw means (3) is a screw (3a) with a threaded section (3b) and a screw nut (3c), the screw head (3a) being used for support on the Conductor rail (1), and the connecting elements (2a, 2b) being configured in such a way that the screw nut (3c) can be pulled by means of at least one tool in order to generate the force (F₂).

11. Conductor rail (1) having a conductor rail connector (S) according to one of Claims 1 to 10, **characterised in that** the conductor rail (1) has at least one fastening means for anchoring the screw means (3) on its first side (1z) facing toward the conductor rail connector (S).

12. Conductor rail having a conductor rail connector according to Claim 11, **characterised in that** the fastening means is a T-groove for receiving a screw head or a screw nut of the screw means (3), or a bore with an internal screw thread for screwing in the screw means (3).

13. Conductor rail having a Conductor rail connector according to Claim 11 or 12, **characterised in that** the Conductor rail has a sliding surface (1s) for contact with a current collector, two lateral outer walls (1a, 1b) and an outer wall (1z), which faces away from the current collector and forms a first side for bearing of the second connecting element (2b).

## Revendications

1. Dispositif de jonction de barres conductrices (S) servant à relier les extrémités (1a, 1b) de deux barres conductrices (1), comprenant un premier et un deuxième élément de jonction (2a, 2b) ainsi qu'un élément à visser (3), auquel cas les éléments de jonction (2a, 2b) peuvent être reliés aux extrémités (1a, 1b) des barres conductrices à l'aide d'au moins un élément à visser (3), l'élément à visser (3) s'appuyant, d'un côté, sur un premier côté (1z) d'une extrémité de barre conductrice (1a) et, de l'autre côté, sur le premier élément de jonction (2a) et auquel cas une force (F₂) est générée à l'aide d'au moins un élément à visser (3) qui comprime le deuxième élément de jonction (2b) contre le premier côté (1z) d'au moins une barre conductrice (1), les éléments de jonction (2a, 2b) comportant des appuis correspondants, en particulier des faces d'appui (2x, 2y), à partir desquels au moins un appui d'un élément de jonction (2a, 2b) est formé en tant que face d'appui (2x, 2y) disposée obliquement par rapport à la direction de la force (F2), de sorte à générer, à l'aide de la force (F₂) et des faces d'appui obliques (2x, 2y), une force (F3) avec une composante de force (K₁) perpendiculaire à la direction de la force (F2), cette force comprimant au moins un élément de jonction (2a, 2b) avec au moins son autre face d'appui (A₁, A₂) en direction de la force (K₁), en particulier latéralement, contre les barres conductrices (1), auquel cas les éléments de jonction (2a, 2b) sont formés de sorte à être identiques l'un à l'autre.

2. Dispositif de jonction de barres conductrices (S) selon la revendication 1, **caractérisé en ce que** le premier et le deuxième élément de jonction (2a, 2b) sont des pièces profilées.

3. Dispositif de jonction de barres conductrices (S) selon la revendication 2, **caractérisé en ce que** le premier et le deuxième élément de jonction (2a, 2b) sont formés en forme de T en section transversale.

4. Dispositif de jonction de barres conductrices (S) selon une des revendications de 1 à 3, **caractérisé en ce que** le premier et le deuxième élément de jonction (2a, 2b) présentent respectivement une première paroi (2w₁), réalisée, en particulier, en tant que bras, laquelle forme avec un de ses côtés l'autre face d'appui (A₁, A₂).

5. Dispositif de jonction de barres conductrices (S) selon une des revendications de 1 à 4, **caractérisé en ce que** le premier et le deuxième élément de jonction (2a, 2b) présentent, respectivement, une deuxième paroi (2w₂), réalisée, en particulier, en tant que bras, laquelle forme respectivement avec un de ses côtés un appui correspondant ou une face d'appui (2x, 2y).

6. Dispositif de jonction de barres conductrices (S) selon une des revendications de 1 à 5, **caractérisé en ce que** les faces d'appui (2x, 2y) des éléments de jonction (2a, 2b) sont formées de sorte à être parallèles l'une par rapport à l'autre.

7. Dispositif de jonction de barres conductrices (S) selon une des revendications de 1 à 6, **caractérisé en ce que** les faces d'appui (2x, 2y) sont agencées avec un angle ß par rapport à la force (F₂), auquel cas l'angle ß peut mesurer entre 10° et 45°.

8. Dispositif de jonction de barres conductrices (S) selon une des revendications de 1 à 7, **caractérisé en ce que** le premier et le deuxième élément de jonction (2a, 2b) présentent au moins un évidemment, en particulier en forme d'une ouverture de passage (2d) de type fenêtre, d'un perçage ou d'un trou oblong, destiné au passage de au moins un élément à visser (3).

9. Dispositif de jonction de barres conductrices (S) selon une des revendications de 1 à 8, **caractérisé en ce que** les éléments de jonction (2a, 2b) se composent d'un matériau conducteur étant, en particulier, en cuivre.

10. Dispositif de jonction de barres conductrices (S) selon une des revendications de 1 à 9, **caractérisé en ce que** l'élément à visser (3) est une vis avec une tête de vis (3a), une partie filetée (3b) et un écrou (3c), auquel cas la tête de vis (3a) sert d'appui contre la barre conductrice (1) et les éléments de jonction (2a, 2b) sont formés de telle sorte que l'écrou (3c) est serrable à l'aide d'un outil afin de générer la force (F₂).

11. Barre conductrice (1) avec un dispositif de jonction de barres conductrices (S) selon une des revendications de 1 à 10, **caractérisée en ce que** la barre conductrice (1) présente au niveau de son premier côté (1z) orienté vers le dispositif de jonction de barres conductrices (S) au moins un dispositif de fixation pour l'ancrage de l'élément à visser (3).

12. Barre conductrice (1) avec un dispositif de jonction de barres conductrices (S) selon la revendication 11, **caractérisée en ce que** le moyen de fixation est une rainure en T destinée à loger une tête de vis ou un écrou de l'élément à visser (3) ou un perçage avec taraudage pour le vissage de l'élément à visser (3).

13. Barre conductrice (1) avec un dispositif de jonction de barres conductrices (S) selon la revendication 11 ou 12, **caractérisée en ce que** la barre conductrice présente une surface de meulage (1s) pour le contact avec un appareil de prise de courant, deux parois extérieures latérales (Ia, Ib) et une paroi extérieure opposée à l'appareil de prise de courant (1z) qui forme le premier côté pour l'appui contre le deuxième élément de jonction (2b).
